# EUROPEAN PATENT APPLICATION

(11) **EP 1 830 523 A1**
(43) Date of publication of application: **05.09.2007**
(21) Application number: 06251138.1
(22) Date of filing: 02.03.2006
(51) Int. Cl.: H04L 12/56

(54) **Multi-protocol label switching**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

A multi-protocol label switching network or domain (1), and method of operating the same. Label switching control paths are established for forwarding control packets between routers (E1-E4, C1-C6) according to control labels assigned to the control packets by a label assignment server (2). Control labels are assigned by assigning a respective unique control label to respective directional pairs of edge routers, each directional pair comprising a combination of an edge router pair and a direction between the edge routers of the pair. Traffic data paths are also established for forwarding traffic data packets between the routers according to traffic data labels assigned to the traffic data packets. The traffic data labels are distinct from the control labels, and the traffic data paths are different from the control paths.

## Description

The present invention relates to multi-protocol label switching networks and methods of operating such networks (also known as domains). The present invention relates in particular, but not exclusively, to communications networks such as service provider networks, connected to one or more external networks, for example the Internet.

Communication networks (or domains) implement multi-layered protocols for internal and external communication. Typically, a communication network implements Internet Protocol (IP), in particular layer 3 functionality for connectivity with external networks such as the Internet or other carrier/customer networks.

Conventionally, Internet Service Providers (ISPs) have carried out such connectivity using asynchronous transfer mode (ATM) i.e. an IP-over-ATM approach. Similarly, network carriers have conventionally multiplexed Internet traffic as one of many services carried over an ATM core. ATM is essentially a layer 2 process.

The Ethernet is another technology/protocol including layer 2 functionality that is conventionally incorporated in the above mentioned network arrangements. A component of layer 2 communication on Ethernet-based networks is the Medium Access Control (MAC) address, which is used to uniquely identify each interface connected in an Ethernet network.

A further approach being introduced for implementing internal communication and external connectivity of communications networks is the use of Multi-Protocol Label Switching (MPLS). For example, IP/MPLS Internet backbone routers over Synchronous Digital Hierarchy /Synchronous Optical NETwork (SDH/SONET) have been implemented. The MPLS protocol includes Open Shortest Path First routing protocol (OSPF) for core domain routing, Label Distribution Protocol LDP to distribute core label information, and Resource Reservation Protocol (RSVP) for core resource allocation such as bandwidth and delay properties of core tunnels. MPLS is specified and standardised by the Internet Engineering Task Force (IETF). Details of the IETF MPLS working group may be found, for example, at www.ietf.org/html.charters/mpls-charter.html. Details of MPLS are described, for example, in Chapter 7 ("MPLS Concepts") of a book "Build VPNs with IPSec and MPLS", Tan, Nam-Kee, ISBN 0-07-140931-9, McGraw Hill company.

MPLS may conveniently be regarded as "layer 2.5" functionality, as it involves some layer 2 type switching internal to the network, but also relies on layer 3 IP routing. The reliance on layer 3 IP routing occurs particularly at the initial stage, known as "bootstrapping", with native IP packets being used to transfer control packets during bootstrapping.

The present inventor has realised that an inherent weakness of conventional MPLS is that the control plane thereof employs layer 3 protocols and is driven by external IP networks, and as such external IP addresses are disadvantageously allowed access to internal core routers of a given network, e.g. a private network. The present inventor has further realised that it would be desirable to provide a network configuration and process that allows a network to set up an internal control and routing arrangement without using layer 3 protocols such as IP and access to internal core routers from external IP addresses, for example. The present inventor has yet further realised that it would be desirable if, moreover, such an internal control and routing arrangement could nevertheless thereafter communicate with respect to outside networks using layer 3 protocols such as IP.

In a first aspect the present invention provides a method of operating a multi-protocol label switching network or domain comprising a plurality of edge routers and a plurality of core routers for routing traffic data packets; the method comprising establishing label switching control paths for forwarding control packets between the routers according to control labels assigned to the control packets.

The control labels may be assigned by assigning a respective unique control label to respective directional pairs of edge routers, each directional pair comprising a combination of an edge router pair and a direction between the edge routers of the pair.

Traffic data paths may be established for forwarding traffic data packets between the routers according to traffic data labels assigned to the traffic data packets, the traffic data labels being distinct from the control labels; and the traffic data paths being different from the control paths.

In a further aspect, the present invention provides a method of operating a communications network or domain comprising a plurality of edge routers and a plurality of core routers for routing traffic data packets; the method, comprising: assigning a respective unique control label to plural directional pairs of edge routers, each directional pair comprising a combination of an edge router pair and a direction between the edge routers of the pair; informing the plurality of routers of forwarding instructions for forwarding control packets, the forwarding instructions specifying a forwarding next hop destination that is dependent upon a control label value of the control packet; providing control packets with control label values; and the routers routing the control packets provided with control label values between the routers according to the control label values by following the specified forwarding instructions.

The method may further comprise determining respective control paths for the directional pairs, and wherein the forwarding instructions for forwarding control packets specify the determined control paths.

The method may further comprise a given edge router informing other edge routers of external routing details of the given edge router.

The method may further comprise routing traffic data packets between the routers over traffic data paths established between the routers and identified by traffic data label values; the traffic data labels being distinct from the control labels; and the traffic data paths being different from the control paths.

The traffic data packets may be further forwarded from one of the edge routers to an external network and/or may be initially received by one of the edge routers from an external network.

The method may further comprise the core routers using control forwarding tables, the control forwarding table of a given core router specifying to which adjacent router the given core router will forward a control packet to according to the control label value attached to the control packet.

The method may further comprise the edge routers using edge forwarding tables, the edge forwarding table of a given edge router specifying to which other edge router the given edge router will forward traffic data for a given external destination to.

In a further aspect, the present invention provides a multi-protocol label switching network or domain, comprising: a plurality of edge routers and a plurality of core routers; the core routers and the edge routers being adapted to route traffic data packets; the core routers and the edge routers further being adapted to establish label switching control paths for forwarding control packets between the routers according to control labels assigned to the control packets.

The control labels may be assigned by assigning a respective unique control label to respective directional pairs of edge routers, each directional pair comprising a combination of an edge router pair and a direction between the edge routers of the pair.

The routers may be further adapted to establish traffic data paths for forwarding traffic data packets between the routers according to traffic data labels assigned to the traffic data packets, the traffic data labels being distinct from the control labels; and the traffic data paths being different from the control paths.

In a further aspect, the present invention provides a network or domain, comprising: a plurality of edge routers; a plurality of core routers; and a label module; the label module being adapted to assign a respective unique control label to plural directional pairs of edge routers, each directional pair comprising a combination of an edge router pair and a direction between the edge routers of the pair; the plurality of routers being adapted to follow instructions for forwarding control packets, the forwarding instructions specifying a forwarding next hop destination that is dependent upon a control label value of the control packet; and the routers being adapted to route control packets provided with control label values between the routers according to the control label values by following the forwarding instructions.

The forwarding instructions for forwarding control packets may specify control paths.

The edge routers may be further adapted for a given edge router to inform other edge routers of external routing details of the given edge router.

The routers may be further adapted to route traffic data packets between the routers over traffic data paths established between the routers and identified by traffic data label values; the traffic data labels being distinct from the control labels; and the traffic data paths being different from the control paths.

The edge routers may be further adapted to forward the traffic data packets from the edge routers to an external network and/or to receive the traffic data packets from an external network.

The core routers may be further adapted to use control forwarding tables, the control forwarding table of a given core router specifying to which adjacent router the given core router will forward a control packet to according to the control label value attached to the control packet.

The edge routers may be further adapted to use edge forwarding tables, the edge forwarding table of a given edge router specifying to which other edge router the given edge router will forward traffic data for a given external destination to.

The various elements mentioned above may be adapted for use, as stated, during bootstrapping of the network or domain.

In a further aspect, the present invention provides a router comprising a control forwarding table, the control forwarding table specifying to which adjacent router in a network the router is to forward a control packet to according to a control label value attached to the control packet.

In a further aspect, the present invention provides a method of distributing network information in a network; the method comprising distributing the network information using multi-protocol label switching of control packets.

In a further aspect, the present invention provides a method of operating a router in a network; the method comprising the router using a control forwarding table to forward control packets over the network, the control forwarding table specifying to which adjacent router the router is to forward a control packet to according to a control label value attached to the control packet.

The various methods mentioned above may be performed during bootstrapping of the network or domain.

In further aspects, the present invention provides a storage medium storing processor-implementable instructions for controlling one or more processors to carry out the method or implement the network or domain of any of the above aspects.

In further aspects, the present invention provides multi-protocol label switching network or domain, and method of operating the same. Label switching control paths are established for forwarding control packets between routers according to control labels assigned to the control packets. Control labels are assigned by assigning a respective unique control label to respective directional pairs of edge routers, each directional pair comprising a combination of an edge router pair and a direction between the edge routers of the pair. Traffic data paths are also established for forwarding traffic data packets between the routers according to traffic data labels assigned to the traffic data packets. The traffic data labels are distinct from the control labels, and the traffic data paths are different from the control paths.

The present invention tends to provide an effectively "pure" MPLS network from the initial bootstrapping stage. That is, the network does not use any native IP packets to transfer control traffic during the process of setting up network functions. Thus the present invention tends to provide a label switched network based on layer 2 functionality without layer 3 routing. Thus access to internal core router nodes from external IP addresses during set up of the control functions, and later during ongoing use of the control functions, tends to be avoided or reduced. The present invention will tend to provide increased reliability, availability and scalability. The present invention allows control traffic to be separated from customer traffic paths by use of different paths, thereby providing a tendency to improve security by protecting the network against attacks or other problems originating from a customer data plane.

Embodiments of the invention will now be described, by way of example only, with reference to the accompanying drawings, in which:
Figure 1 is a block diagram of a network in which an embodiment of the present invention is implemented;
Figure 2 is a flowchart showing certain steps of an embodiment of the present invention comprising a process of setting up an internal control and routing arrangement for the network of Figure 1 and implementing data transport through the network with respect to outside networks;
Figure 3 schematically shows an internal forwarding table provided for the network of Figure 1;
Figure 4 schematically shows parts of two control forwarding tables provided for respective core routers of the network of Figure 1;
Figure 5 schematically shows part of an edge forwarding table provided for an edge router of the network of Figure 1;
Figure 6 schematically shows parts of three data forwarding tables provided for two respective core routers and an edge router of the network of Figure 1; and
Figure 7 is a flowchart showing certain steps of a reverse address resolution process that may be employed during, or after, the above described process of Figure 2.

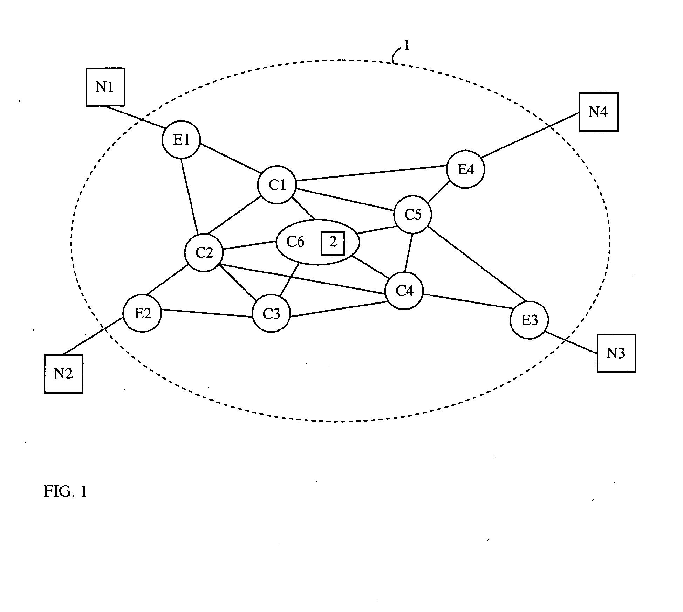

Figure 1 is a block diagram of a network 1 in which a first embodiment of the present invention is implemented. Network 1 may also be considered as, or called, a domain.

Network 1 comprises a plurality of core routers. Typically, such a network may comprise many such core routers, however for clarity only six, namely C1, C2, C3, C4, C5 and C6, are shown and described in this example. One of the core routers, in this example core router C6, includes a label module, implemented in this embodiment in the form of a label assignment server 2, whose function will be described later below. The core routers need not have public IP addresses.

Network 1 further comprises a plurality of edge routers for connecting to external networks including for example the Internet. Each edge router is connected to one or more of the core routers C1-C6. Again, typically, such a network may comprise many such edge routers, however for clarity only four, namely E1, E2, E3, and E4, are shown and described in this example. Each edge router is further connected to a respective external network, in this example four such external networks are included, namely N1, N2, N3 and N4. Each edge router has a public address, in this example a respective IP address.

In this example, the various networks are connected as follows. Core router C6 is connected to all the other core routers C1-C5. Core router C1 is further connected to core router C2, and edge routers E1 and E4. Core router C2 is further connected to core routers C3 and C4, and to edge router E2. Core router C3 is further connected to core router C4 and edge router E2. Core router C4 is further connected to core router C5 and edge router E3. Core router is further connected to edge router E4. Edge routers E1, E2, E3and E4 are respectively further connected to external networks N1, N2, N3 and N4.

Network 1 is arranged in a typical conventional MPLS topology, except for the inclusion of label assignment server 2. For convenience, an overview of conventional MPLS operation of network 1 will first be described, as follows.

In a conventional MPLS network, the label-swapping forwarding algorithm is fundamentally the same one as is used on ATM and Frame Relay switches. The label is a short, fixed-length value carried in the packet header to identify a Forwarding Equivalence Class (FEC). An FEC is a set of packets that are forwarded over the same path through a network, although they do not necessarily have the same ultimate destination. The FECs are determined by the destination IP networks found in a main routing table. When a packet enters an MPLS-enabled network, the packet is classified, assigned a label, and then forwarded to the next hop in a Label-Switched Path (LSP).

Each LSP is created over the best path selected by an Interior Gateway Protocol (IGP), toward the destination network. A typical IGP such as OSPF or IS-IS (Intermediate System to Intermediate System Protocol) is used to propagate routing information to all routers in an MPLS domain to determine the best path to specific destination networks. Each hop within the network core forwards packets based on the label, rather than, say, IP address, until the final router is reached where the label is discarded and conventional IP forwarding resumes. LSPs are functionally equivalent to a virtual circuit, and can be determined by a variety of methods, including for example the following: offline path calculations, on-line calculations using constraint-based routing techniques, or a hybrid of both. A label distribution protocol such as Label Distribution Protocol (LDP) or Border Gateway Protocol (BGP) is used to propagate labels for these networks as well as build the LSPs.

### MPLS has two main functional planes:

(i) The control plane, which is responsible for the routing information exchange and label distribution between adjacent nodes. The control plane uses standard routing protocols such OSPF, IS-IS and BGP to exchange information with other, e.g. external, routers to build an IP forwarding table or label forwarding information base (L-FIB). The control plane uses label distribution protocols such as LDP or RSVP to exchange labels and populate the L-FIB.
(ii) The data plane, which is responsible for forwarding packets according to the destination IP address or label using L-FIB managed by the control plane. The data plane is a simple label-based forwarding engine that is independent of the type of routing protocol or label distribution protocol running on control plane.

MPLS is specified and standardised by the Internet Engineering Task Force (IETF). Details of the IETF MPLS working group may be found, for example, at www.ietf.org/html.charters/mpls-charter.html. Details of MPLS are described, for example, in Chapter 7 ("MPLS Concepts") of a book "Build VPNs with IPSec and MPLS", Tan, Nam-Kee, ISBN 0-07-140931-9, McGraw Hill company, the contents of which are incorporated herein by reference.

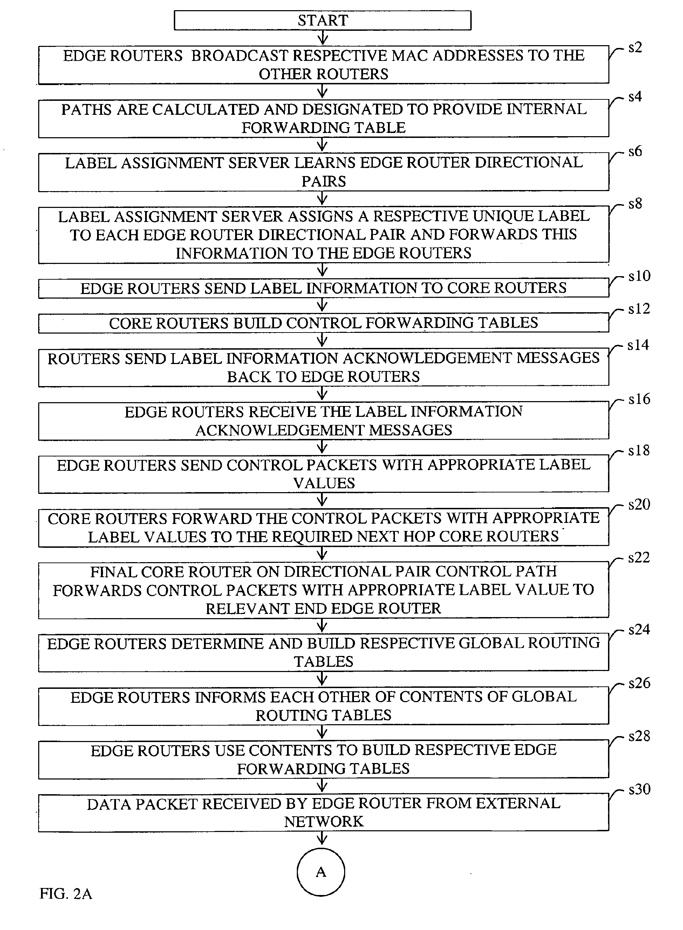

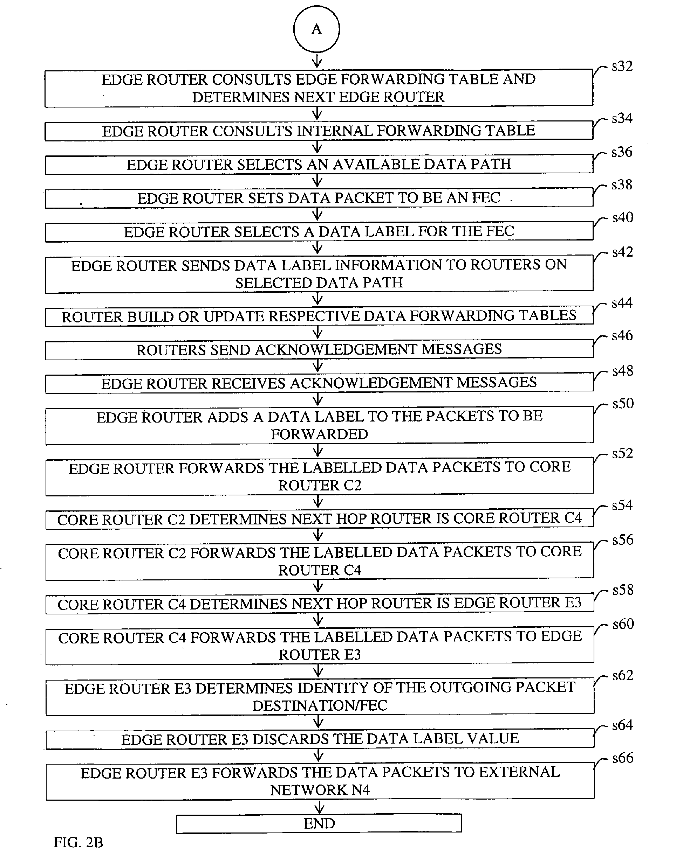

In the present embodiment, MPLS is implemented in network 1 in conventional fashion except for specific differences implemented with respect to bootstrapping without using IP addresses, including use of the label assignment server 2, and corresponding data packet transfer, as is described below in more detail with reference to Figures 2-7.

Furthermore, in the present embodiment, conventional medium Access Control (MAC) addresses are employed. MAC address is a component of layer 2 communication in Ethernet-based networks. The MAC address is used to uniquely identify every interface connected to an Ethernet network. Every Ethernet card manufactured has a unique address so that cards from different vendors can be interconnected on an Ethernet-based network without any address conflicts. MAC addresses are used by network equipment such as switches to route information to the correct port on which a destination machine resides.

Figure 2 is a flowchart showing certain steps of an embodiment of the present invention in the form of a process of setting up an internal control and routing arrangement for network 1 and implementing data transport through network 1 with respect to outside networks.

As will be explained in more detail below, as part of this process, label assignment 2 listens to the label requirements of the edge routers and manages a pool of control labels.

When bootstrapping commences or has commenced, at step s2, each edge router (in this example E1, E2, E3 and E4) broadcasts its respective 48 bit MAC address to the other edge routers and also the core routers, e.g. edge router E1 broadcasts its 48 bit MAC address to edge routers E2, E3 and E4, and to core routers C1, C2, C3, C4, C5 and C6.

At step s4, paths are calculated and designated, using the MAC address of each router, to provide an internal forwarding table. Any suitable algorithm or process, in this embodiment a Dijkstra algorithm (as described in E. Dijkstra, "A note on two problems in connection with graphs," Numerische Mathematik, 1: 269-271, 1959, the contents of which are incorporated herein by reference) is used to calculate disjoint shortest paths between each edge router pair (disjoint paths being paths with no common nodes) for each direction, i.e. for "directional pairs" E1 to E2, E1 to E3, E1 to E4, E2 to E1, E2 to E3, E2 to E4, E3 to E1, E3 to E2, E3 to E4, E4 to E1, E4 to E2, and E4 to E3. Note here the terminology a "directional pair" is being used to indicate a pair of edge routers and moreover the aspect that we are considering the route or direction from the first edge router of the pair to the second edge router of the pair (as opposed to the route or direction from the second edge router of the pair to the first edge router of the pair). For each of the above directional pairs, one calculated disjoint path, preferably, as is the case in this example, the shortest disjoint path, is designated as a control path; and for each of the above directional pairs, the other calculated disjoint paths are designated and reserved as data paths. Thus a fully meshed virtual network of paths is built among all the edge routers. Consequently, each edge router knows its shortest path to each other edge router.

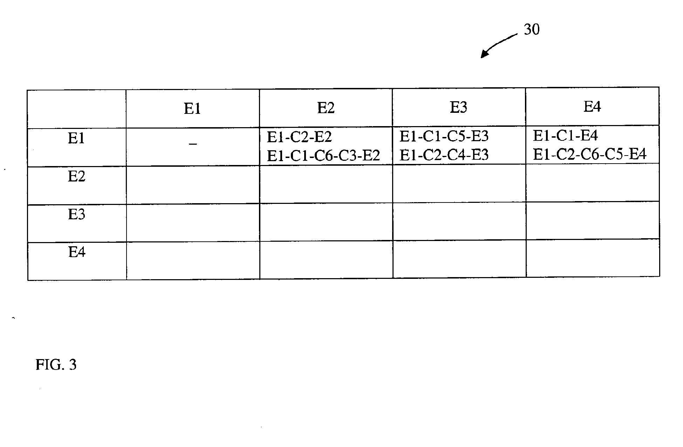

The internal forwarding table 30 of this embodiment is shown schematically in Figure 3. A complete copy of this table may be stored at each edge router, or alternatively only the entries for routes from a given router need be stored at that router. For clarity, in Figure 3 only the entries for routes from edge router E1 are shown entered. Referring to Figure 3, it can be seen for routes from edge router E1 to edge router E2 there is a shortest disjoint path E1-C2-E2 and a further (longer) disjoint path E1-C1-C6-C3-E2. Thus the path E1-C2-E2 is designated as the control path for the directional pair E1 to E2, and the path E1-C1-C6-C3-E2 is designated and reserved as the data path for the directional pair E1 to E2. (Note due to the simplified form of this example, there is only one data path, however in examples with more edge routers, there will be multiple disjoint data paths of equal length.) Similarly, for the directional pair E1 to E4, the shortest disjoint path E1-C1-E4 is designated as the control path, and the further (longer) disjoint path E1-C2-C6-C5-E4 is designated and reserved as the data path.

In the case of the directional pair E1 to E3, there are two shortest disjoint paths of equal length, i.e. E1-C1-C5-E3 and E1-C2-C4-E3. In this situation, any suitable approach can be used to choose one as the control path, e.g. random or pseudo-random selection, or some criteria based on the configuration of the MAC address, or for example some other pre-programmed ranking system. In this example, the path E1-C1-C5-E3 is randomly chosen as the control path.

At step s6, the label assignment server 2 (located in this example at core router C6) learns all the edge router directional pairs as contained in the internal forwarding table 30.

At step s8, the label assignment server 2 assigns a respective unique reserved label to each edge router directional pair and forwards this information to each of the edge routers (as well as storing this information). Further details of the form of these labels, and how these labels are reserved, are as follows.
(i) First, a number of pre-configured labels are reserved as "control labels" based on the current size and estimated future growth of the network.
(ii) For example, assume n is the current total number of edge routers in the network, and m is an estimated maximum number of edge routers in the network within over the course of a given time period, say the next 5 years. The range of control label value reserved for future use is from 1 to m (m-1), of which 1 to n (n-1) will be used with immediate effect for the existing form of the network.
(iii) In the present example, there are four edge routers, i.e. n =4, and n(n-1)= 4X3= 12, hence 12 labels numbered from 1 to 12 (or according to any other appropriate numbering system) are initially used as control label values.

However, it will be appreciated that the particular choice of control label numbers, and the precise numbering system for these control labels is not critical, and any other from of numbering or reserving for these control labels may be employed, provided that labels are assigned uniquely (at least are uniquely in use at any given time), and control label values can be distinguished from data traffic labels which are described later below.

Returning to the description of the process of Figure 2, as a result of step s8 having been performed, each edge router knows which control label to use to reach any given other edge router. In this example, assume the control label assigned for the directional pair E1 to E3 is label number 2.

Thereafter, at step s10, each edge router sends label information to each of those core routers that are present in any of the edge router's control paths. For example, edge router E1 sends label information to core routers C1, C2 and C5 since these appear in the control routes from edge router E1 to edge routers E2, E3 and E4. For example, for edge router directional pair E1 to E3, for which the control path is E1-C1-C5-E3, edge router E1 informs core router C1 that when receiving a packet with label value 2, the next hop for the packet is to C5, and edge router E1 also informs core router C5 that when receiving a packet with label value 2, the next hop for the packet is to edge router E3.

As a result, each core router learns which adjacent router it will need to forward a control packet to according to the label value attached to the control packet; in other words, the core router learns what the next hop downstream is for any control packet it receives dependent upon the label value.

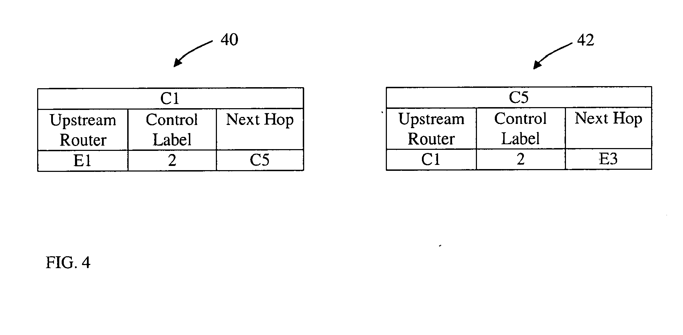

Consequently, at step s12, each core router can build a respective control forwarding table to store this information. By way of example, Figure 4 schematically shows part of the control forwarding table 40 for core router C1 and part of the control forwarding table 42 for core router C5. For clarity, for the control forwarding tables 40 and 42, only the respective entries associated with the edge router directional pair E1 to E3, whose label value is 2, as described above, are shown.

At step s14, the routers send label information acknowledgement messages back to any edge router that sent label information to them. For example, core routers C1 and C5 send label information acknowledgement messages back to edge router E1.

At step s16, the edge routers receive the label information acknowledgement messages. For example, edge router E1 receives the label information acknowledgement messages from core routers C1 and C5.

After receiving such label information acknowledgement messages, at step s18 the edge routers send control packets, with appropriate label values, for the routers on edge router directional pair paths emanating therefrom. For example, edge router E1 sends control packets with label value 2 to core router C1.

Thereafter, at step s20, the core routers forward the control packets with appropriate label values to the required next hop core routers. For example, core router C1 forwards the control packets with label value 2 to core router C5.

Thereafter, at step s22, the final core router on a directional pair control path forwards the control packets with appropriate label value to the relevant end edge router of the control path. For example, core router C5 forwards the control packets with label value 2 to edge router E3.

The control packets sent during steps s18-s22 serve to distribute network information about topology, resource and so on for routing and signalling purposes. At step s24, each edge router E1, E2, E3, E4 determines and builds a respective global routing table with respect its respective external network N1, N2, N3, N4. In more detail, each edge router E1, E2, E3, E4 runs external Border Gateway Protocol (eBGP) to interconnect with its respective external network N1, N2, N3, N4; listens to the resulting received routing information from the respective external network N1, N2, N3, N4; and builds the respective global routing table.

At step s26, each edge router E1, E2, E3, E4 informs the other edge routers about the contents of its global routing table.

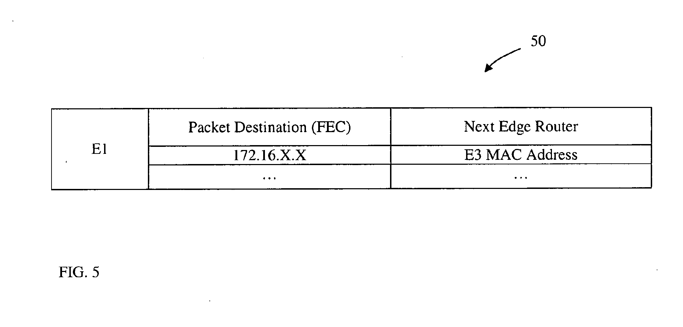

At step s28, each edge router uses this information to build a respective "edge forwarding table", i.e. a table it can later use to forward data to outside destinations (by selecting an appropriate edge router, identified by its MAC address, according to the location of the outside destination). By way of example, Figure 5 schematically shows part of the edge forwarding table 50 for edge router E1. For clarity, only the entry associated with one example of an outside destination is shown. The outside destination, specified in terms of a range of Forwarding Equivalence Class (FEC), is entered in the edge forwarding table along with the appropriate edge router, in this case for example E3, that E1 should forward packets for that outside destination to.

The following steps describe data plane forwarding of data traffic, for example customer traffic. This will be described by way of example by considering a data packet received, at step s30, by edge router E1 from its external network N1. Assume the data packet is heading to a destination effectively specified by FEC 172.16.23.58, i.e. a destination included in the range of FEC shown in edge forwarding table 50.

At step s32, edge router E1 consults its edge forwarding table 50, and determines therefrom that the next edge router for the data packet is edge router E3.

At step s34, edge router E1 consults its internal forwarding table 30, and at step s36 selects an available data path listed therein that reaches E3. Here, this is the path E1-C2-C4-E3 (note the other path to E3, namely E1-C1-C5-E3, has been used as the control path.

At step s38, edge router E1 sets this data packet to be a FEC. Note, other data packets which are heading to the same destination can be categorised and assigned to this FEC when received later as appropriate.

At step s40, edge router E1 selects (or specifies) a data label for this FEC. The data label values used are different from the above described control label values, i.e. available values are from a separate numerical range to that reserved for control labels. In this example, let us assume edge router E1 selects a data label value 300, say.

At step s42, edge router E1 sends this data label information to the core routers and the edge router that form the chosen available data path. In this case the path is E1-C2-C4-E3, so edge router E1 sends the data label information to core routers C2 and C4, and to edge router E3.

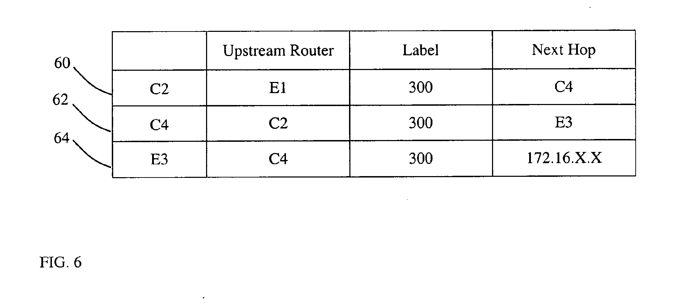

At step s44, each router receiving this data label information uses the information to build or update a respective data forwarding table, i.e. a table they can later use to forward the data packet to the appropriate next router along the path. By way of example, Figure 6 schematically shows part of a data forwarding table 60 for core router C2, part of a data forwarding table 62 for core router C4, and part of a data forwarding table 64 for edge router E3. For clarity, for each data forwarding table shown in Figure 6, only the single entry arising from the present situation being described is shown. The tables are such that each entry lists the identity of the upstream router, the data label value, and the identity of the next hop router (for core router entries) or the outgoing destination network (for the exiting edge router).

At step s46, each router receiving the data label information, in this case core routers C2 and C4, and edge router E3, additionally sends an acknowledgement message back to edge router E1.

At step s48, edge router E1 receives the acknowledgement messages from core routers C2 and C4, and from edge router E3.

Edge router E1 now knows that the routers on the intended path are all set up for correctly forwarding data packets labelled with data label value 300. Hence, at step s50, edge router E1 adds a data label with value 300 to the packets to be forwarded.

At step s52, edge router E1 forwards the labelled data packets to core router C2.

At step s54, core router C2 consults its data forwarding table 60 and determines that the next hop router is core router C4.

Hence, at step s56, core router C2 forwards the labelled data packets to core router C4.

At step s58, core router C4 consults its data forwarding table 62 and determines that the next hop router is edge router E3.

Hence, at step s60, core router C4 forwards the labelled data packets to edge router E3.

At step s62, edge router E3 consults its data forwarding table 64 and determines the identity of the outgoing packet destination/FEC, which in this example is 172.16.X.X.

At step s64, edge router E3 discards the data label.

At step s66, edge router E3 forwards the data packets to its external network N4, with appropriate package labelling to identify FEC of 172.16.X.X.

Thus it will be apparent that the network configuration and process described above has allowed the network 1 to set up an internal control and routing arrangement without using layer 3 protocols such as IP. Moreover, the internal control and routing arrangement can nevertheless thereafter communicate with respect to outside networks using layer 3 protocols such as IP.

In the above example of routing of data packets, the data packets were received from outside the network 1 by edge router E1, routed through the network 1 to edge router E3, and forwarded out of the network 1 by edge router E3. However, in other examples, routing of data packets as described above and using some or all of the routing tables described above, may be implemented in other scenarios, for example in any of the following scenarios:
(i) data packets being initiated within the network 1, at either an edge router or a core router thereof, then being routed through the network 1 and then forwarded out of the network;
(ii) data packets being received by the network 1, then being routed through the network 1 to reach a final destination within the network 1, the final destination being an edge router or a core router; and
(iii) data packets being initiated within the network 1, at either an edge router or a core router thereof, then being routed through the network 1 to reach a final destination within the network 1, the final destination being an edge router or a core router.

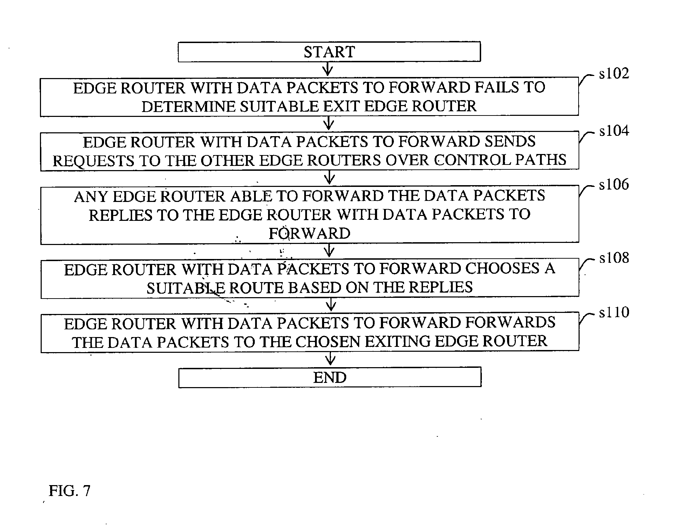

Figure 7 is a flowchart showing certain steps of a reverse address resolution process that may advantageously be employed during, or after, the above described process of Figure 2.

At step s102, an edge router of network 1 with data packets to forward to an end destination fails to determine a suitable other edge router as the exit edge router for the data packets, i.e. the edge router cannot find the next edge router for the packets in its edge forwarding table. This circumstance may arise for any of a number of reasons, for example dynamic changes to the network 1 after initial bootstrapping, or incomplete information being provided during building of the edge forwarding tables.

At step s104, the edge router with data packets to forward to an outside destination sends requests to the other edge routers of network 1, over the established control paths, asking whether the other edge routers are able to forward the data packets.

At step s106, any edge router able to forward the data packets replies accordingly to the edge router with data packets to forward.

At step s108, the edge router with data packets to forward chooses a suitable route based on the reply or replies. If only one edge router has replied, then the edge router with data packets to forward chooses a route to that edge router that has replied. If more than one edge router has replied, then the edge router with data packets to forward chooses one of the replying edge routers according to any suitable criterion. For example, the exiting edge router may be chosen on the basis of one or more quality of service criteria, or according to a pre-configured hierarchical specification, e.g. edge routers may be ranked according to desirability of use for this purpose, either uniformly across the network or differently for each edge router.

At step s110 the edge router with data packets to forward forwards the data packets to the chosen exiting edge router using the processes described above with reference to Figure 2.

For ease of understanding, in the example above, various different processes have been described together, for example initial setting up of the network control routes (and labels), a process for reserving the labels, and examples of data traffic flow through the network 1 using data routes controlled by the established control routes. However, it will be appreciated that each of these types of processes in themselves represent embodiments of the present invention. For example, an aspect of the present invention is embodied by setting up the control routes described above (by way of example as described with respect to steps s2 to s28 above) irrespective of the way data traffic is consequently flowed through the network. Similarly, another aspect of the present invention is embodied by the way data traffic is flowed through a label control structure (by way of example as described with respect to steps s30 to s66 above) where the label control structure has been set up using a different process to that described for example in steps s2-s28 above.

Further, it should be noted that one or more of the process steps depicted in the flowcharts of Figures 2 and 7 and described above may be omitted or such process steps may be performed in differing order to that presented above and shown in the Figures. Furthermore, although all the process steps have, for convenience and ease of understanding, been depicted as discrete temporally-sequential steps, nevertheless some of the process steps may in fact be performed simultaneously or at least overlapping to some extent temporally. Also, different routers may perform given steps either simultaneously with other routers, or at least in some form of temporally-overlapping manner with respect to the other routers, or sequentially, depending upon the design of a given network, say.

In the above embodiments, control paths and control labels are established for each directional pair of edge routers, i.e. a respective control path, with corresponding control label, is established for each combination of edge router pair and direction between the edge routers of the pair. Although this is preferred and offers fullest use of the network, this is not essential. For example, in other embodiments, control routes and labels may be established for some but not all of the directional pairs. In this event, the choice of which directional pairs to establish control paths and labels for may be based upon any suitable criterion, as required according to the circumstances of the network under consideration. For example, edge routers which seldom make external connections may be omitted for reasons of economy or capacity. Dynamic processes may be used to update the choice of edge router directional pairs for which control paths and labels are used. Also, another possibility is for control paths to be determined for all directional pairs, but control labels only assigned to some of them.

In the above embodiments, data traffic e.g. customer traffic is not allowed to go through any of the control paths. This provides optimum security. However, in other embodiments, data traffic, e.g. customer traffic, may be allowed to go through some or all of the control paths to provide further capacity for such data traffic, albeit with a possible trade off in comparison to security levels. Such routing may be allowed only when traffic levels have reached a certain level compared to the capacity of the data paths.

The above embodiments provide and use the various tables described above and shown in Figures 3-6. However, these tables are by way of example only, and in other embodiments other tables with a different structure may be used to store and look-up appropriate routing information.

The above embodiments have been described using the terminology "routers". This terminology "routers" encompasses other terminology such as "nodes", network entities, devices, components, and so on.

The present invention may be applied to any suitable type of network or domain, including private networks and domains, implementing MPLS technology. This includes, for example, any of the following (in the following, some or all of the mentioned networks may also be known as domains):
(i) a part of, or the whole of, a national telecommunications network;
(ii) an internal network of a business or a public body;
(iii) an Internet-access service provider network;
(iv) service providers such as media content service providers; broadcast service provider, mobility service provider, and so on.

Furthermore the present invention may be applied in any MPLS environment, including where MPLS is extended to be used in combination with other technologies. For example, a number of new standards are being developed to extend packet based MPLS operation to other technologies, including circuit based DWDM and optical switches, as described for example in P. Smith, et al, "Generalized MPLS Signalling - RSVP-TE Extensions", Internet Draft, draft-ietf-mpls-generalized-rsvp-te-06.txt, Nov. 2001, the contents of which are included herein by reference. This extension of MPLS standardised by the IETF under the umbrella of Generalised MPLS (GMPLS) provides a platform for a dynamic and flexible resource management of packet, time division multiplexed and optical networks to allow for the interoperability and scalable parallel growth of both IP and optical networks. In other words, for example, the present invention can be applied to GMPLS networks.

Furthermore, the present invention can be applied to a plurality of inter-domain or inter-provider MPLS networks. For example, MPLS is tending to be applied as an inter-domain technology as well as a single domain technology, as described for example in L. Fang, et al: Interprovider IP-MPLS services: Requirements, Implementations and Challenges, http://ieeexplore.ieee.org/iel5/35/31202/01452840.pdf?arnumber=1452840, the contents of which are included herein by reference.

The above embodiments may be implemented by configuring or adapting any suitable apparatus, for example a computer or other processing apparatus, forming part or all of the above mentioned routers or other network components. Alternatively, the processes described may be implemented by processors implementing processor-implementable instructions and/or stored on a suitable storage medium, such as computer memory, hard disk, floppy disk, ROM, PROM etc. The processors may be one or more central processing units in one or more computers, or network processors, or one or more dedicated processors.

It will be appreciated that the terminology "control packets" is used herein to refer to packets of control data, i.e. data used by the network for setting up and/or maintaining network details such as paths, connections and so on. This data includes, but is not limited to, control data required, or otherwise used, during bootstrapping. Such control data is readily distinguished from traffic data, such as customer traffic data, containing information being passed from entities using the network to pass such information, but not concerned with establishing or maintaining operation of the network.

## Claims

1. A method of operating a multi-protocol label switching network or domain comprising a plurality of edge routers and a plurality of core routers for routing traffic data packets; the method comprising establishing label switching control paths for forwarding control packets between the routers according to control labels assigned to the control packets.

2. A method according to claim 1, wherein the control labels are assigned by assigning a respective unique control label to respective directional pairs of edge routers, each directional pair comprising a combination of an edge router pair and a direction between the edge routers of the pair.

3. A method according to claim 1 or 2, further comprising establishing traffic data paths for forwarding traffic data packets between the routers according to traffic data labels assigned to the traffic data packets, the traffic data labels being distinct from the control labels; and the traffic data paths being different from the control paths.

4. A method of operating a communications network or domain comprising a plurality of edge routers and a plurality of core routers for routing traffic data packets; the method, comprising:
assigning a respective unique control label to plural directional pairs of edge routers, each directional pair comprising a combination of an edge router pair and a direction between the edge routers of the pair;
informing the plurality of routers of forwarding instructions for forwarding control packets, the forwarding instructions specifying a forwarding next hop destination that is dependent upon a control label value of the control packet;
providing control packets with control label values; and
the routers routing the control packets provided with control label values between the routers according to the control label values by following the specified forwarding instructions.

5. A method according to claim 4, further comprising determining respective control paths for the directional pairs, and wherein the forwarding instructions for forwarding control packets specify the determined control paths.

6. A method according to claim 4 or 5, further comprising a given edge router informing other edge routers of external routing details of the given edge router.

7. A method according to any of claims 4 to 6, further comprising routing traffic data packets between the routers over traffic data paths established between the routers and identified by traffic data label values; the traffic data labels being distinct from the control labels; and the traffic data paths being different from the control paths.

8. A method according to any of claims 1 to 7, wherein the traffic data packets are further forwarded from one of the edge routers to an external network and/or are initially received by one of the edge routers from an external network.

9. A method according to any of claims 1 to 8, further comprising the core routers using control forwarding tables, the control forwarding table of a given core router specifying to which adjacent router the given core router will forward a control packet to according to the control label value attached to the control packet.

10. A method according to any of claims 1 to 9, further comprising the edge routers using edge forwarding tables, the edge forwarding table of a given edge router specifying to which other edge router the given edge router will forward traffic data for a given external destination to.

11. A multi-protocol label switching network or domain, comprising:
a plurality of edge routers and a plurality of core routers;
the core routers and the edge routers being adapted to route traffic data packets;
the core routers and the edge routers further being adapted to establish label switching control paths for forwarding control packets between the routers according to control labels assigned to the control packets.

12. A network or domain according to claim 11, wherein the control labels are assigned by assigning a respective unique control label to respective directional pairs of edge routers, each directional pair comprising a combination of an edge router pair and a direction between the edge routers of the pair.

13. A network or domain according to claim 11 or 12, wherein the routers are further adapted to establish traffic data paths for forwarding traffic data packets between the routers according to traffic data labels assigned to the traffic data packets, the traffic data labels being distinct from the control labels; and the traffic data paths being different from the control paths.

14. A network or domain, comprising:
a plurality of edge routers;
a plurality of core routers; and
a label module;
the label module being adapted to assign a respective unique control label to plural directional pairs of edge routers, each directional pair comprising a combination of an edge router pair and a direction between the edge routers of the pair;
the plurality of routers being adapted to follow instructions for forwarding control packets, the forwarding instructions specifying a forwarding next hop destination that is dependent upon a control label value of the control packet; and
the routers being adapted to route control packets provided with control label values between the routers according to the control label values by following the forwarding instructions.

15. A network or domain according to claim 14, wherein the forwarding instructions for forwarding control packets specify control paths.

16. A network or domain according to claim 14 or 15, wherein the edge routers are further adapted for a given edge router to inform other edge routers of external routing details of the given edge router.

17. A network or domain according to any of claims 14 to 16, wherein the routers are further adapted to route traffic data packets between the routers over traffic data paths established between the routers and identified by traffic data label values; the traffic data labels being distinct from the control labels; and the traffic data paths being different from the control paths.

18. A network or domain according to any of claims 11 to 17, wherein the edge routers are further adapted to forward the traffic data packets from the edge routers to an external network and/or to receive the traffic data packets from an external network.

19. A network or domain according to any of claims 11 to 18, wherein the core routers are further adapted to use control forwarding tables, the control forwarding table of a given core router specifying to which adjacent router the given core router will forward a control packet to according to the control label value attached to the control packet.

20. A network or domain according to any of claims 11 to 19, wherein the edge routers are further adapted to use edge forwarding tables, the edge forwarding table of a given edge router specifying to which other edge router the given edge router will forward traffic data for a given external destination to.

21. A network or domain according to any of claims 11 to 20 wherein the elements are adapted for use as recited during bootstrapping of the network or domain.

22. A router comprising a control forwarding table, the control forwarding table specifying to which adjacent router in a network the router is to forward a control packet to according to a control label value attached to the control packet.

23. A method of distributing network information in a network; the method comprising distributing the network information using multi-protocol label switching of control packets.

24. A method of operating a router in a network; the method comprising the router using a control forwarding table to forward control packets over the network, the control forwarding table specifying to which adjacent router the router is to forward a control packet to according to a control label value attached to the control packet.

25. A method according to any of claims 1 to 10, 23 and 24, wherein the method is performed during bootstrapping of the network or domain.

26. A storage medium storing processor-implementable instructions for controlling one or more processors to carry out the method of any of claims 1 to 10, and 23 to 25.
